# EUROPEAN PATENT APPLICATION

(11) **EP 4 768 879 A1**
(43) Date of publication of application: **01.07.2026**
(21) Application number: 24223713.9
(22) Date of filing: 30.12.2024
(51) Int. Cl.: G01L 5/00, H01M 4/04, H01M 10/04

(54) **BATTERY MANUFACTURING SYSTEM AND METHOD**

(71) Applicant: LG Energy Solution, Ltd., Seoul 07335 (KR)
(72) Inventor: HONG, Jong Hyuk, 34122 Daejeon (KR); CHOI, Jin Hyeong, 34122 Daejeon (KR); LEE, Gyu Sun, 34122 Daejeon (KR)
(74) Representative: Goddar, Heinz J.

(57) **Abstract**

The invention relates to a battery manufacturing system and a corresponding method for manufacturing batteries, the manufacturing system comprising a cylindrical roller configured to apply a roll pressure onto a battery cell while rolling over the battery cell; and a protrusion protruding from a lateral surface of the cylindrical roller in a radial direction of the cylindrical roller; a pressure measurement device configured to measure a measured pressure applied and/or received by the cylindrical roller while rolling over the battery cell; and a control unit configured to adjust a position of the cylindrical roller as a function of the measured pressure.

## Description

### TECHNICAL FIELD

The invention relates to the technical field of battery manufacturing and, specifically, the manufacturing of secondary battery cells. In particular, the invention relates to a battery manufacturing system and a corresponding battery manufacturing method.

Battery technology has been advancing rapidly in recent years. Significant improvements have been made in battery energy density. Enhanced charging capabilities and faster charging times are also being achieved, making battery-using electric devices more practical and convenient for everyday use. As battery technology improves and economies of scale are realized through increased production, the cost of manufacturing batteries is decreasing.

This development particularly allows electric vehicles (EVs) to travel longer distances on a single charge. The increasing importance of batteries for EVs is driven by their positive environmental impact, potential for energy independence, technological advancements, cost reduction, support for renewable energy integration, grid resilience, and alignment with sustainable development objectives.

Corresponding battery cells comprise a layer structure with a first layer comprised of a first electrode material and a second layer comprised of a second electrode material, which are separated by a first separator. To prevent the battery cell from short-circuiting with an adjacent battery cell in a battery cell stack, the layer structure further comprises a second separator adjoining the second layer. To enable further processing steps, prevent damage to the battery cell, and ensure the functionality of the entire battery cell stack, the ends of the first separator and the second separator overlapping the electrode material must be permanently and securely sealed to each other.

In known systems for manufacturing battery cells, the first electrode material and the second electrode material are intermittently dispersed onto a first separator film and separator film a second separator film, respectively. This layer structure is then guided into a rolling gap formed under a cylindrical roller. The cylindrical roller is configured to apply a roll pressure onto a battery cell while rolling over the battery cell. The cylindrical roller comprises a protrusion protruding from a lateral surface of the cylindrical roller in a radial direction of the cylindrical roller. This protrusion is adapted to periodically apply a pressure on the first separator film and the second separator film in gaps in between layers of electrode material, thereby fusing the first separator film and the second separator film into a sealing line.

The crucial degree of the sealing (e.g., the adhesion strength of the sealing) directly depends on the applied pressure on the first separator film and the second separator film and indirectly on the width of the rolling gap. In Systems corresponding to the State-of-the-Art, this pressure is adjusted by fixing a position of the cylindrical roller with regard to the battery cell passing underneath. An initial rolling gap width is determined by adjusting the position of the cylindrical roller upward or downward until satisfactory sealing is achieved. The position of the cylindrical roller is then fixed. However, the applied pressure and, thus, the degree of sealing varies and may decreases with time. Without significant technical overhead, a faulty sealing line is difficult to detect.

### SUMMARY OF THE INVENTION

The problem is at least partially solved or alleviated by the subject matter of the independent claims of the present disclosure, wherein further examples are incorporated in the dependent claims. In the following, embodiments of the invention are introduced and their features are described in detail. Any, some, or all of the embodiments can be combined with one another unless indicated otherwise or technically inappropriate.

According to an aspect of the present invention, a battery manufacturing system is presented. The manufacturing system further comprises a pressure measurement device configured to measure a measured pressure applied and/or received by the cylindrical roller while rolling over the battery cell and a control unit configured to adjust a position of the cylindrical roller as a function of the measured pressure. Thus, the manufacturing system can detect when insufficient pressure is applied and/or received by the cylindrical roller and pro- and/or reactively adjust the position of the cylindrical roller to automatically ensure a high degree of sealing line strength.

Thus, instead of relying on indirect means for applying pressure on the protrusion, such as a fixed with of the rolling gap, the pressure applied by the protrusion can be at least in part directly controlled by adjusting the position of the cylindrical roller and thus affecting the width of the sealing gap. As the sealing strength depends on the controlled pressure applied by the protrusion onto the battery, the forming of proper sealing lines can be assured. Consequently, the invention enables the manufacturing of battery cells with consistent and dependable sealing lines.

Here, the term "battery manufacturing" explicitly encompasses the manufacturing of secondary batteries. Generally, a manufacturing system in the sense of the inventions corresponds to a combination of resources and process units that work together to produce batteries. Such systems can comprise various components and facilities, which may be organized in production stages. The battery manufacturing system may encompass all the production stages from raw material preparation to the assembly of battery cells and modules, quality control, testing, and packaging. The battery manufacturing system may further include anyone, some, or each of the additional features as disclosed below unless explicitly indicated otherwise or technically inappropriate. The battery manufacturing system may be or be part of a smart factory, in which the battery manufacturing system as disclosed herein is implemented. The examples and optional features of the automated manufacturing system as disclosed herein may also apply to the smart factory. The term "smart factory" is used herein as commonly understood in the field of industrial processing, particularly in the fields of automation, the Internet of Things, artificial intelligence, big data analytics, cloud computing, and robotics. In particular, the smart factory may be understood in connection with the Industry 4.0 paradigm. The smart factory as used herein may also be referred to as a digital factory or intelligent factory and may indicate an advanced manufacturing facility that utilizes various digital technologies, automation, and data exchange in production processes.

Herein, the term "battery" may be used in accordance with the teachings of electrochemical energy storage. The battery may encompass a primary battery and a secondary battery. In some examples, the battery may explicitly refer to a secondary battery that is rechargeable. Herein, a battery may indicate an industrial product that stores chemical energy and converts it into electrical energy. The battery may comprise at least one battery cell. A corresponding battery cell comprises at least a positive electrode, a negative electrode, a first separator and a second separator. Without loss of generality, the battery cell as used herein may refer to a pouch-type battery cell, a prismatic battery cell or a cylindrical battery cell.

Herein, reference is made to "a" battery or "a" battery cell to generally indicate one or more batteries or battery cells for the sake of conciseness. The manufacturing system described herein may be configured to operate and be carried out in an industrialized production process. Hence, the reference herein to the general singular term "a battery" may encompass processing (including e.g., transporting, rolling, sealing) one single battery, multiple battery cells in a sequence (i.e., one battery cell at a time). Furthermore, in specific cases, the general singular term "a battery" may encompass processing multiple batteries as a set of batteries at a time (i.e., in groups).

A "cylindrical roller" in the sense of the invention is an essentially cylindrical or conical tool, which is adapted for the chipless forming of a plate-shaped workpiece such as a battery cell by applying pressure or force over a line-like surface and/or flat surface of the roller to said workpiece. A cylindrical roller may at least consist of a roller supported by two bearings at each end over which the roller is rotatably mounted on a rotation axis. The first end of the roller and or the second end of the roller may comprise a journal connected to a drive unit adapted to impart a rotation motion to the roller around the rotation axis. The cylindrical roller may additionally comprise support and/or drive rollers. The roller itself may consist of steel, cast iron, copper, or any other material suitable for the intended use in the manufacturing of batteries. Moreover, the roller may comprise a layer structure, composed of layers with different materials suitable for ensuring structural integrity of the roller and/or counteracting deformation of the roller and/or providing an adequate surface hardness. As required in the manufacturing process of batteries, the roller may be heated or cooled. A cylindrical roller in the sense of invention may also be known to those pertaining to the field of the invention under the designation pressure roller, rolling cylinder, or calender.

Herein, the expression "apply roll pressure" refers to the act of exerting a force from the cylindrical roller onto a surface of the battery cell while the cylindrical roller is rotated in the direction of a feed direction of the battery cell of or counter to a feed direction of the battery cell. In particular, the term incorporates the exerting of straining and/or stretching and/or compression force onto the battery cell, wherein the aforementioned forces may be applied in succession or simultaneously in different positions on or under a surface of the battery cell. The force is preferably uniformly applied in a line-like or flat area in a position of a nip formed in between the cylindrical roller a counter roller or other transporting means adapted to transport the battery cell in a direction.

Moreover, "rolling over" in the sense of the invention is the rotational motion of the cylindrical roller around the rotation axis in which the roller is mounted while the battery cell is transported relative to the cylindrical roller. The indication of "under" does not imply a specific orientation with regard to the direction of gravity but also encompasses transportation to the left, right, and above the cylindrical roller. The rotational axis of the cylindrical roller itself may not be fixed but adjustable in its position relative to the feed direction and position of the battery cell.

Herein, the term "protrusion" indicates an exposed geometry on the lateral surface of the cylindrical roller. Specifically, the protrusion may exceed in radial direction other structures and surfaces on the lateral surface of the cylindrical roller at least directly adjacent to the protrusion. In particular, the protrusion can be shaped to come into contact with the battery cell as the cylindrical roller is rolled over the battery cell, while other structures on the lateral surface of the cylindrical roller remain clear of the surface of the battery cell. The protrusion can be part of the cylindrical roller, i.e. inseparable from the cylindrical roller, formed from the same material of the cylindrical roller, or mountable in or onto the cylindrical roller in a non-destructive fashion. Specifically, the protrusion can be adapted to be frequently and conveniently removed and/or exchanged from the cylindrical roller. The protrusion may be adapted to spread the force applied by the cylindrical roller over a line-like area oriented perpendicular to a feed direction of the battery cell when the protrusion comes into contact with the battery cell.

Herein, a "lateral surface" of the cylindrical roller indicates the outmost positioned surface of the cylindrical roller in a radial direction parallel to its rotation axis. The lateral surface may correspond to the geometric surface formed by the maximum extent in the radial direction of the cylindrical roller in any given angular direction as measured from the rotation axis.

Herein, a "radial direction" corresponds to the radial direction commonly associated with the cylindrical coordinate system, whereas the longitudinal axis of said coordinate system aligns with the rotation axis of the cylindrical roller.

Herein, the expression "pressure measurement device" relates to a single unit or a plurality of units and/or devices, capable of sensing a mechanic, pneumatic, or hydraulic fluid pressure and transforming said sensed pressure into a quantitative signal. The quantitative signal may itself be a measured pressure or transformed into the measured pressure by the pressure measurement device or additional devices of the manufacturing system. Moreover, the pressure measurement device may be configured to transform and/or log the sensed pressure. The pressure measurement can comprise or consist of, a manometer, a pressure gauge, a transducer, and or a pressure sensor. The pressure measurement device can be configured to measure continuously or periodically. The pressure measurement device can comprise a plurality of sensors. The pressure measurement device can be configured to communicate wirelessly with the sensors, itself, and/or the control unit. Preferably, the pressure measurement device is an Internet of Things (IoT) device.

Herein, the expression "measured pressure" corresponds to a signal measured by the pressure measurement device, which relates to the pressure applied or received by the protrusion in an absolute or relative relationship. Preferably, the measured pressure is the physical pressure of a gas or liquid or a mechanical component converted into an electrical signal that can be measured, monitored, and processed. The measured pressure can be provided as an analog output, for example as 4-20 mA or voltage signals, or a digital output, which can be further processed by systems or control devices.

Herein, the terms "control" and "control unit" are to be understood in accordance with the principles of automatic control in the technical field of automation and systems engineering. The control unit may be a singular device or comprise a plurality of devices. Generally, the control unit is configured to receive the measured pressure, and preferably, by means of a feedback mechanism, to control the applied pressure by adjusting a position of the cylindrical roller. Here control is the maintaining of a desired output level of the applied pressure by adjusting inputs or conditions of the means of adjusting the position of the cylindrical roller. The control unit may comprise a controller, for example, a programmable logic controller (PLC), a distributed control system DCS, or a microcontroller. The controller can be configured to process signals from the pressure measurement device, apply control algorithms, and output commands to actuators. Moreover, the control device may comprise a human-machine interface (HMI) adapted to allow operators to interact with the control unit or the wider manufacturing system. The HMI may include displays, touchscreens, and/or control panels for monitoring and manual intervention. Furthermore, the control unit may comprise communication hardware adapted to facilitate data exchange between different parts of the control system or with the wider manufacturing systems, including wired networks, wireless transmitters, and communication protocols.

The control unit can comprise a power supply unit adapted to provide the necessary power for all electronic components within the control system. Lastly, the control system may comprise one or a plurality of feedback devices. These may comprise additional sensors or encoders adapted to provide real-time data to the controller to compare desired and actual performance. To adjust the position of the cylindrical roller, the control unit may comprise at least one actuator.

An actuator in the sense of the invention is a device that converts an input signal or control signal into a required form of mechanical energy. Specifically, an actuator can be a device that produces force, torque, and/or displacement in a controlled way and in a controlled direction, when an electrical pneumatic or hydraulic input is supplied to it. An actuator converts such an input signal into the required form of mechanical energy. The actuator may comprise or be connected to a control device and a source of energy. The control signal may be relatively low energy compared to the produced force or torque and can be electric voltage or current, pneumatic, or hydraulic fluid pressure. The displacement achieved is commonly linear or rotational, for example, the displacement generated by a linear motor or rotary motor, respectively. An actuator in the sense of the invention may be an incremental-drive actuator or a continuous-drive actuator. Specifically, an actuator can be a stepper motor. Further examples of continuous-drive actuators are DC torque motors, induction motors, hydraulic and pneumatic motors, and piston-cylinder drives. The actuator can be configured to apply a controlled force directly or indirectly to the cylindrical roller, to facilitate a relocation into a desired position. For example, the actuator can comprise transmission, such as a leadscrew to generate a linear movement from the torque provided in a rotary motion can be adapted to function as a linear actuator and/or a lever element to enhance and/or redirect the controlled pressure. Moreover, the manufacturing system can comprise a plurality of actuators configured to apply a move and keep the cylindrical roller in a desired position. The plurality of actuators may apply force parallel or/and or in series to enhance the pressure locally or differentiate the applied pressure in different locations of the protrusion or the battery cell. Preferably, the actuators apply a force directing to a bearing or a bearing housing of the cylindrical roller.

Similarly, the expression "a function of the measured pressure" is to be interpreted in the context of automatic control and relates to set of mathematic rules and/or transformations for the measured pressure to a set of inputs or conditions of the means configured to adjust the position of the cylindrical roller.

Herein, the term "position of the cylindrical roller" relates to a spatial position of the cylindrical roller. Generally, the position of the cylindrical roller is a position of the cylindrical roller relative to the battery cell, an idle roller or other component of the battery manufacturing system. The position of the cylindrical roller may be the position and/or distance of the cylindrical roller to the battery cell in the radial direction. Specifically, the position of the cylindrical roller may be the minimal distance between a surface of the battery cell passing underneath the cylindrical roller and the rotation axis of the cylindrical roller.

In a further embodiment of the invention, the pressure measurement device can be configured to measure the measured pressure as the protrusion comes into contact with the battery cell.

Thereby, the manufacturing system is provided the capability to directly obtain the measured pressure while the sealing pressure is applied to the battery cell and the sealing line is formed. Thus, the position of the cylindrical roller and the applied pressure can be adjusted accordingly at the very moment when the sealing line is formed, guaranteeing that the applied pressure satisfies designated standards and/or requirements for sealing the first separator film and the second separator film into a sealing line.

Herein, the term "comes into contact with" relates to a point in time or period, when a mechanical force is applied from the protrusion onto the battery cell.

In a further embodiment, the battery manufacturing system further comprises an idle roller arranged opposite to the cylindrical roller so as to support the battery cell against the cylindrical roller. The control unit can be configured to adjust the position of the cylindrical roller relative to the idle roller as a function of the measured pressure. The idle roller can provide a supporting counterforce to the pressure applied by the protrusion. As the can counterforce can be pinpointedly applied in a nip formed between the cylindrical roller and the idle roller, mechanical stress to the battery cell is minimized. Consequently, failure of battery cell components during production is minimized and longevity is increased.

Herein, an "idle roller" in the sense of the invention is an essentially cylindrical or conical tool, which is adapted to applying pressure or force over a line-like surface and/or flat surface of the idle roller to a battery cell. An idle roller may at least consist of a roller supported by two bearings at each end over which the roller is rotatably mounted on a rotation axis. The first end of the roller and or the second end of the roller may comprise a journal connected to a drive unit adapted to impart a rotation motion to the idle roller around the rotation axis. The cylindrical roller may additionally comprise support and/or drive rollers. The roller itself may consist of steel, cast iron, copper, or any other material suitable for the intended use in the manufacturing of batteries. Moreover, the roller may comprise a layer structure, composed of layers with different materials suitable for ensuring structural integrity of the roller and/or counteracting deformation of the roller and/or providing an adequate surface hardness. As required in the manufacturing process of batteries, the roller may be heated or cooled. A lateral surface of the idle roller can be covered by a layer of elastic material, preferably silicone. A diameter of the idle roller can be larger than a diameter of the cylindrical roller to ensure that the pressure is applied in differing positions on the lateral surface of the idle roller in each revolution of the idle roller.

Herein, the expression "arranged opposite" in the context of the invention is to be interpreted as positioned with respect to the cylindrical roller to be able to encompass the battery cell at least in one position between the cylindrical roller and the idle roller. In particular, the idle roller is arranged opposite the cylindrical roller so that the rational axis of the idle roller and the rotational axis of the cylindrical roller are arranged parallel to each other. Preferably, the idle roller is arranged opposite the cylindrical roller to form a nip dimensioned to receive the battery cell in between the idle roller and the rotational axis of the cylindrical roller.

Herein, the expression "as to support the battery cell against the cylindrical roller" is to be generally interpreted as to be adapted to supply a force to the battery cell while a pressure is applied to the battery cell. Preferably, the force is suppliable in a radial direction counter to the direction of the pressure applied. Moreover, the force is preferably suppliable in a line-like area comparable in size and orientation to a sealing line.

Herein, the expression "position of the cylindrical roller relative to the idle roller" relates to a spatial position of the cylindrical roller with respect to the idle roller. position of the cylindrical roller relative to the idle roller may be the position and/or distance of the cylindrical roller to the idle roller in the radial direction. Specifically, the position of the cylindrical roller may be the minimal distance between the rotation axis of the cylindrical roller and the rotation axis of the idle roller.

In a further embodiment, the pressure measurement device comprises a load cell, wherein the cylindrical roller or the idle roller is rotatably mounted on the load cell and the load cell is configured to measure a pressure applied or received by the cylindrical roller or an idle roller, respectively, while rolling over the battery cell.

The load cell allows for the indirect measurement of the applied pressure. The force applied to or received by the protrusion is transferred through the cylindrical roller and the idle roller and transferred into the respective bearings. These bearing forces are picked up by the load cell and converted into the measured pressure. In this fashion, no sensors need to be present in the rotating components of the manufacturing system, significantly reducing the cost and increasing the maintainability.

Herein, a "load cell" is a type of sensor employed to measure force, weight, or load exacted onto it by a machine component mounted to it and/or supported by it. In particular, the load cell is configured to receive and support bearings of the cylindrical roller or idle roller and measure bearing forces exacted to the load cell. Here, the load converts the bearing forces into an electrical signal that can be measured, quantified, communicated, and/or analyzed. Load cells in the sense of the invention can operate based on the principle of strain measurement. Specifically, when a load is applied to the bearings while a rolling pressure is applied to a battery cell, the load cell or components of the load cell deform slightly, and this deformation changes the resistance in the strain gauges embedded within the load cell. A bearing or a bearing housing of the cylindrical roll or the idle roller can be directly or indirectly mounted to the load cell. A first longitudinal end of the cylindrical roller and a second longitudinal end of the cylindrical roller and/or the idle roller can be rotatably mounted on a load cell. The pressure measurement device can be configured to subtract bearing forces stemming from the weight and rotation of the cylindrical roller or idle roller from the pressure signal received from the load cells to generate the measured pressure.

Herein, the expression "rotatably mounted" refers to the mechanical support of the cylindrical roller and the idle roller, which allows a rotation of the cylindrical roller and the idle roller around their respective rotation axis. Specifically, the expression indicates the support of the cylindrical roller and the idle roller in a bearing arrangement, preferably comprising a bearing and a bearing housing. A bearing or a bearing housing of the cylindrical roller or the idle roller can be directly or indirectly mounted to the load cell.

In an embodiment, a first longitudinal end of the cylindrical roller and a second longitudinal end of the cylindrical roller and/or the idle roller can be rotatably mounted on a load cell.

As the measured pressure can be obtained on both longitudinal ends of the cylindrical roller and/or idle roller, the embodiment allows for a spatial distinction of the applied pressure to the battery cell. Hence, not only a mean applied pressure can be controlled for, but instead a spatially resolved pressure can be measured and accounted for. As such, for example, sufficient sealing strength can be ensured along the entire length of the sealing line. Consequently, the embodiment allows for the generation of more homogeneous sealing lines.

Herein, a "first longitudinal end of the cylindrical roller and a second longitudinal end of the cylindrical roller and/or the idle roller correspond" to the longitudinal direction outmost positioned surfaces of the cylindrical roller or idle roller, respectively. The longitudinal direction is to be understood as the lateral direction commonly associated with the cylindrical coordinate system, whereas the longitudinal direction essentially aligns with the rotation axis of the cylindrical roller. Furthermore, the pressure measurement device can comprise a first sensor and a second sensor configured to measure a first measured pressure and a second measured pressure applied to or received by the same protrusion. The control unit can be configured to control the controlled pressure applied to the protrusion as a function of the mean and/or minimum and/or maximum of at least a first measured pressure and a second measured pressure.

In another embodiment, the pressure measurement device can comprise a piezoelectric sensor configured to measure a pressure applied and/or received by the protrusion.

Hence, the embodiment allows a more precise measurement of measured pressure with high sensitivity and a superior sampling rate, thereby increasing the accuracy of the measured presser and improving the quality of a control response of the adjusting of the position of the cylindrical roller. Consequently, the sealing strength of the sealing line can be more accurately adjusted.

Herein, a "piezoelectric sensor" within the meaning of the invention is a device or plurality of devices that uses the piezoelectric effect as commonly understood by the expert skilled in the art to measure changes in pressure, acceleration, temperature, strain, of the protrusion's state and converts them to an electrical signal. The core principle of a piezoelectric sensor relies on certain materials that generate an electrical charge in response to mechanical stress. In particular, a piezoelectric sensor in the context of the invention detects a mechanical force directly or indirectly transmitted from the protrusion to the sensor. The sensor converts these measurements into signals that can be communicated and/or interpreted, for monitoring, control, and/or automation purposes.

In a further embodiment, the piezoelectric sensor can be situated in a radial direction in between the cylindrical roller and the protrusion. The piezoelectric sensor can be situated in a radial position on an outmost edge of the protrusion and adapted to directly measure a pressure between the protrusion and the separator film.

Hence, the embodiment allows a more direct measurement of the direction and magnitude of the measured pressure, thereby increasing the accuracy of the quality of a control response of the actuator. Consequently, the sealing strength of the sealing line can be more accurately adjusted.

Herein, the expression "situated in between the cylindrical roller and the protrusion" indicates the geometric arrangement of the sensor in radial direction as in series with the cylindrical roller and the protrusion, wherein the sensor either directly or indirectly adjoins in radial direction the cylindrical roller on a first side and either directly or indirectly adjoins the protrusion on a second side. Additionally, in the radial direction below or above the sensor, support components, such as guiding elements, support plates, bearing elements, and/or lever elements adapted to transmit a force or displacement movement between the sensor and the protrusion may be situated in between the cylindrical roller and the protrusion, respectively.

Herein, the term "radial direction" corresponds to the radial direction commonly associated with the cylindrical coordinate system, whereas the longitudinal axis of said coordinate system aligns with the rotation axis of the cylindrical roller.

Alternatively, the sensor can be situated in a radial position on the outmost edge of the protrusion and adapted to directly measure the pressure between the protrusion and the separator film. Moreover, the sensor can be a capacitive pressure sensor or an electromagnetic pressure sensor. Alternatively, the sensor can be situated in a radial position on the outmost edge of the protrusion and adapted to directly measure a pressure between the protrusion and the separator film.

In another embodiment, the protrusion can be movably mounted within a channel on the lateral surface of the cylindrical roller to atmospherically seal said channel. The pressure measurement device comprises a pneumatic pressure sensor configured to measure the gas pressure within the channel while rolling over the battery cell.

Correspondingly, the protrusion can perform a displacement motion in a radial direction relative to the lateral surface, allowing the cylindrical roller to adjust the rolling pressure in a am even and precise way along the whole longitudinal direction of the protrusion. The channel acts analogous to a gas spring, providing a progressive spring-force curve. Consequently, sealing lines may be generated with higher precision and tighter geometrical limits.

Herein, the expression "movably mounted" refers to an attachment securement of the protrusion in such a way that it can move or be adjusted within certain limits with respect to the cylindrical roller and or later surface. In particular, the protrusion is not fixed in place and can change position or orientation but instead held so as to move freely and/or to be relocated as needed. Specifically, the movably mounted protrusion may be adapted for automated controlled movement in relation to the cylindrical roller and or later surface. A corresponding controlled movement in the sense of the invention is a linear sliding, a pivoting, or a rotation, or a combination of these. To this end, the cylindrical roller may comprise a mounting system encompassing bearings, hinges, brackets, rails, and the like that allow movement while maintaining stability and support of the protrusion.

Herein, "a channel" in the context of the invention is a geometrical topology in the lateral surface of the cylindrical roller that allows for the fitting and guiding of the movement of the protrusion. Particularly, the channel is preferably a long, narrow deepening within the lateral surface of the cylindrical roller. The channel may also be known by other designations as groove, indentation, or cutout. The channel may comprise straight channel walls, rounded channel walls, or v-shaped channel walls. The channel provides full mechanical support in lateral and angular directions to the protrusion mounted therein. Moreover, an effective guiding of the protrusion in the radial direction is achieved, preventing tilting or jamming of the protrusion while pressure is applied to or received by the protrusion. Consequently, the rolling pressure can be applied to the battery cell with higher precision and lower risk of mechanical failure.

Herein, a "lateral surface of the cylindrical roller" indicates the outmost positioned surface of the cylindrical roller in a radial direction parallel to its rotation axis. The lateral surface may correspond to the geometric surface formed by the maximum extent in the radial direction of the cylindrical roller in any given angular direction as measured from the rotation axis.

Herein, the expression "to atmospherically seal" indicates a mode of mounting the protrusion within the channel as to disrupt a fluidical exchange between the inside of the channel and the environment of the manufacturing system. In particular, the channel and protrusion in conjunction, potentially with additional components of the cylindrical roller, form a seal or barrier that prevents the ingress or egress of air and other fluids between the inside of the channel and the environment outside the channel. Preferably, to this end, the channel and/or protrusion and/or first locking member or second locking member accommodate seals, O-rings, or gaskets, adapted (e.g., dimensioned and shaped such as) to retain fluids and prevent leakage.

Herein, a "pneumatic pressure sensor" in the context of the invention is a device used to measure the pressure of gases or air in pneumatic systems. These sensors can detect and convert the pressure of a fluid (usually air, but not limited to air) into an electrical signal, which can be analyzed, displayed, and/or utilized in the control unit. The pneumatic pressure sensor may be an absolute pressure sensor adapted to measure pressure relative to a perfect vacuum, which is especially suitable for acquiring precise pressure measurements. Alternatively or additionally, the pneumatic pressure may be a gauge pressure sensor adapted to measure a pressure relative to atmospheric pressure in an environment of the manufacturing system. Alternatively or additionally, the pneumatic pressure may be a differential pressure sensor adapted to measure the difference in pressure between two points, for example, the closed confinement enclosed the gas pressure formed within the closed confinement between and a second atmospherically sealed volume within the cylindrical roller.

In a further embodiment, the battery manufacturing system comprises a plurality of protrusions protruding from a lateral surface of the cylindrical roller in a radial direction of the cylindrical roller. The protrusions can align in a longitudinal direction of the cylindrical roller. The pressure measurement device is configured to measure a measured pressure of each of the plurality of protrusions as each protrusion comes into contact with the battery cell.

As the measured pressure can be obtained in multiple locations on the lateral surface of the cylindrical roller, the embodiment allows for a spatial distinction of the applied pressure to the battery cell. Hence, not only a mean applied pressure can be controlled for, but instead a spatially resolved pressure can be measured and accounted for. As such, for example, sufficient sealing strength can be ensured along the entire length of the sealing line. Consequently, the embodiment allows for the generation of more homogeneous sealing lines.

Herein, a "plurality of protrusions" indicates a multitude of protrusions located in different positions on the lateral surface of the cylindrical roller, wherein each protrusion of the plurality of protrusions or multiple protrusions of the plurality of protrusions in conjunction are configured to form a sealing line in a battery cell when a roll pressure is applied onto a battery cell. The protrusions can be located in a different longitudinal and/or angular position on the lateral surface of the cylindrical roller. Preferably, the protrusions of the multitude of protrusions are each movably mounted to the lateral surface, to at least allow a relative movement in a radial direction relative to the other protrusions in the plurality of protrusions.

Herein, the expression to "be configured to measure a measured pressure applied to or received by each protrusion of the plurality of protrusions" is to be interpreted as possessing the capability to obtain directly or indirectly a measured pressure applied to or received by individual protrusions, preferably applied to or received by each individual protrusion on the lateral surface. In particular, each individual protrusion of the plurality of protrusions can be assigned a designated sensor of the pressure measurement device adapted to obtain a measured pressure of the individual protrusion.

Alternatively or additionally, the protrusions can be staggered in the longitudinal direction of the cylindrical roller, allowing the manufacturing of two battery cells in parallel in a longitudinal direction, but applying the pressure in succession to the individual battery cells. The pressure measurement device can be configured to measure a measured pressure of each one of the plurality of protrusions as each protrusion comes into contact with the battery cell.

In an embodiment, the battery manufacturing system comprises a plurality of protrusion rows, spaced in an angular direction on the lateral surface of the cylindrical roller. Preferably, the battery manufacturing systems comprises at least three protrusion rows. The protrusion rows can be equidistantly spaced in the angular direction.

The plurality of protrusion rows allows the generation of multiple sealing lines in a single revolution of the cylindrical roller. Simultaneously, while maintaining a high rate of production, a diameter of the cylindrical roller can be increased to achieve a favorable curvature of the lateral surface of the cylindrical roller for applying pressure to the battery cell. Consequently, the embodiment allows a higher production rate while maintaining a high sealing line quality.

Herein, the term "protrusion rows" corresponds to a single protrusion or a plurality or grouping of protrusions that essentially align in an angular direction on the lateral surface of the cylindrical roller. Specifically, the protrusion or a plurality or grouping of protrusion in the protrusion row forms an arrangement in a horizontal line on the lateral surface of the cylindrical roller. Each row of protrusions can be adapted to apply pressure sufficient to generate a sealing line in an individual battery cell.

Herein, an "angular direction" corresponds to the angular direction commonly associated with the cylindrical coordinate system, whereas the longitudinal axis of said coordinate system aligns with the rotation axis of the cylindrical roller. The angular direction indicates the position of the protrusion row in the circular path projected onto the lateral surface of the cylindrical roller.

In a further embodiment, the control unit is configured to independently adjust a position of a first lateral end of the cylindrical roller and a second lateral end of the cylindrical roller and/or a first lateral end of the idle roller and a second lateral end of the idle roller. Additionally, the control unit can be configured to adjust a first position of the cylindrical roller and/or idle roller as a function of a second measured pressure and a second position of the cylindrical roller and/or idle roller.

Thereby, the system for manufacturing system is adapted to vary the pressure applied to or received by the protrusion along the longitudinal direction. Thus, uneven wear and tear of the protrusion, cylindrical roller, and idle roller can be compensated without halting the manufacturing system for maintenance. As such, the serviceability of the manufacturing system is greatly improved.

Herin, the term to "independently adjust a position of a first lateral end and a second lateral end of the cylindrical roll" indicates that a position of the first lateral end of the cylindrical roller can separately modulated from the position of the second lateral end of the cylindrical roller. For example, the position of the first lateral end of the cylindrical roller can be adjusted to be closer to the battery cell, while the position of the second lateral end of the cylindrical roller remains fixed, is moved away from the battery cell or moved in a greater or lesser extend towards battery cell and vice versa. To this end, each lateral end of the cylindrical roller and or idle roller would be equipped with its own actuator. These actuators can be adapted to move the ends of the respective rollers either vertically, horizontally, or at an angle.

In a further embodiment, the control unit is configured to apply a bending pressure to the cylindrical roller and/or idle roller.

The bending pressure counteracts the Inherent deformation the cylindrical roller or idle roller as pressure is applied to the battery cell. In known systems, this deformation results in varying pressure along the longitudinal of the protrusion, with the pressure decreasing away from the supports and towards the longitudinal center of the cylindrical roller or idle roller. Thereby, the embodiment allows the manufacturing of more homogeneous sealing lines along the whole width of the battery cell.

Herein, the term "applying a bending pressure" corresponds to an intentional adjustment or application of force across the cylindrical roller or idle roller to influence its curvature and alignment. Specifically, the bending pressure is applied to cylindrical roller and/or idle roller to bend the longitudinal axis out of a straight shape and preferably, towards the battery cell. The bending pressure can be applied to the cylindrical roller and/or idle roller by using actuators and/or design features like crowning that introduce a curvature to the roller. Specifically, the actuators can act on upper or lower warts of the bearing houses, to introduce a bending torque at the longitudinal ends of the respective roller. Alternatively or additionally, bending pressure can be applied by support rollers, which are placed in contact with the cylindrical roller or idle roller to apply a force through to influence the respective roller's shape and/or alignment.

In an embodiment, the protrusion can be a tip. The geometry of the tip assures a precise application of pressure into the first separator film and the second separator film, while simultaneously providing sufficient space while rolling over the battery to avoid coming into contact with the first electrode material and the second electrode material. Thus, adequate sealing strength is achieved while the risk of damage to the battery cell is reduced. Consequently, the embodiment allows for the manufacturing of battery cells with a significantly reduced rate of defects.

Herein, the term "tip" refers to the geometric shape of the protrusion, whereas the tip comprises an essentially triangular cross-section in the longitudinal direction. In particular, the tip comprises a first support side configured to engage with a surface of the cylindrical roller or the lateral surface of the cylindrical roller and, adjacent in angular direction, two sloped mounting surfaces that converge into a contact peak. Preferably, the tip is symmetrical with respect to its center axis in radial direction. Preferably, the tip can be a steel tip, an aluminum tip, a copper tip, or any other material or corresponding alloy suitable for applying and sustaining the applied pressure. Surface properties of the contact, such as surface roughness and surface curvature may be adapted to generate friction heat between the contact peek and the battery cell while preventing an entry and/or destruction of the first separator film and the second separator film.

Another aspect, the invention relates to a battery manufacturing method. The method comprises the following steps: applying a roll pressure onto a battery cell using a cylindrical roller with a protrusion protruding from a lateral surface of the cylindrical roller in a radial direction of the cylindrical roller; rolling over the battery cell; while the cylindrical roller rolling over the battery cell, measuring a measured pressure applied and/or received by the cylindrical roller; and adjusting a position of the cylindrical roller as a function of the measured pressure.

Thus, instead of relying on indirect and static means for applying pressure on the protrusion, with a fixed width of the rolling gap, the pressure applied by the protrusion can be at least in part directly and dynamically controlled by adjusting the position of the cylindrical roller and thus affecting the width of the sealing gap. As the sealing strength depends on the controlled pressure applied by the protrusion onto the battery, the forming of proper sealing lines can be assured. Thereby, battery cells with a high-quality sealing line can be cost efficiently manufactured.

In a further embodiment, the battery manufacturing method may further comprise the feeding of the measured pressure into a control loop, preferably a closed control loop; generating a control signal by comparison of the measured pressure to a reference pressure to be applied and/or received by the cylindrical roller and subsequent error-minimization to receive a control signal; and adjusting a position of the cylindrical roller based on the control signal.

Consequently, proven control models and strategies as well as hardware can be applied to ensure that each sealing line is generated with sufficient sealing pressure, independent of the wear and tear of manufacturing system components or variations in the battery cell materials.

Herein, the term control loop is to be interpreted as the commonly understood concept in control engineering and systems theory. Correspondingly, a control loop in the context of the invention involves the use of feedback to maintain a desired output or performance level in a system, here the controlled pressure applied to the battery cell. At least, the control loop performs the comparison of a desired setpoint of the pressure applied or received by the protrusion to or reference value of the applied or received pressure, and a performing adjustment of the controlled pressure based on the difference between the two.

The adjusting can be performed under load and/or in real-time. Alternatively, the adjusting can be performed while the roll pressure is not applied.

The battery manufacturing method can further comprise the controlling of the measured pressure, wherein the measured pressure is compared to a threshold pressure and flagging the battery cell to be discarded if the measured pressure stays below the threshold pressure. The controlling of the measured pressure may comprise the recognizing of an abnormal pressure, which is the result of the protrusion striking the first electrode material and/or the second electrode material and is indicative of a faulty battery cell or a feed speed of the battery cell and a rotational speed of the cylindrical roller being out of sync. Upon recognizing an abnormal pressure, the system for manufacturing can be halted, and/or the battery cell can be flagged as faulty.

The reference pressure can be a scalar value or a time-resolved signal. Alternatively, the reference pressure can be a tuple of values, preferably a lower pressure threshold value, an ideal pressure value, and/or an upper pressure threshold value.

The generating can be performed by a controller, preferably by a PID Controller.

In a last aspect, the invention relates to a battery manufactured with a battery manufacturing system as described above or manufactured according to the above-described method for battery manufacturing. The resulting battery comprises battery cells with highly dependable sealing lines. In these battery cells, sufficient sealing strength in the sealing lines is guaranteed, preventing the risk of leakage of electrolyte out of the battery cell as well as negating the risk of short-circuiting of adjacent electrodes in a battery cell stack. Thus, the corresponding battery is safer and more dependable.

The effects of the present disclosure are not limited to the effects mentioned above and additional other effects not described above will be clearly understood from the detailed description and the accompanying drawings by those skilled in the art.

### BRIEF DESCRIPTION OF THE DRAWINGS

Fig. 1A. and 1B show an isometric view and a detail view, respectively, of a system for manufacturing battery cells as known in the art.
Fig 2 shows a schematic depiction of an embodiment of a system for manufacturing battery cells according to an example.
Fig. 3A and 3B show a schematic depiction a detail view, respectively, of a second embodiment of a system for manufacturing battery cells according to an example.
Fig. 4A and 4B each show a schematic depiction a detail view of a further example of a system for manufacturing battery cells.

### DETAILED DESCRIPTION OF EMBODIMENTS

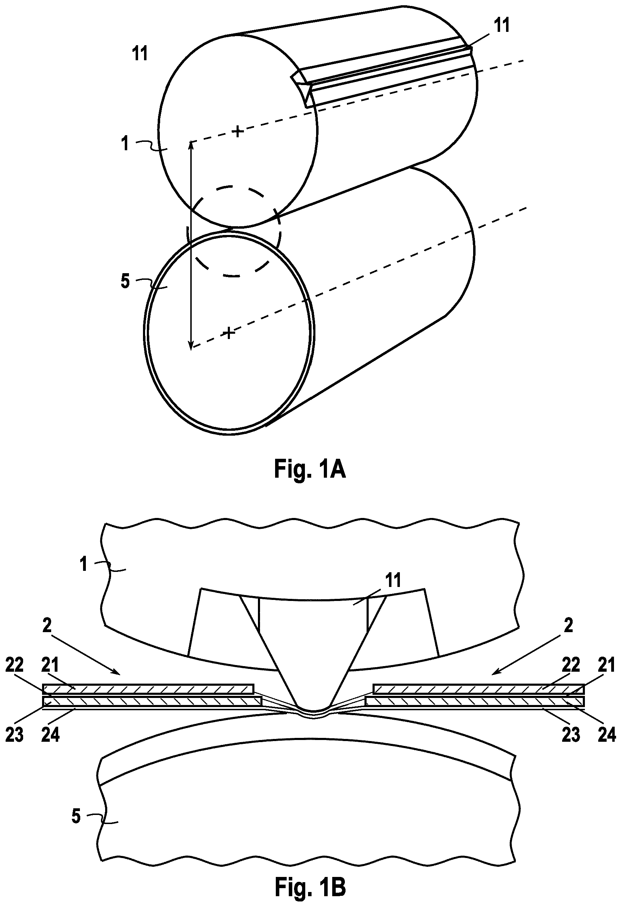

Figure 1A shows an isometric view and a detail view, respectively, of a system for manufacturing battery cells known from the art. The System comprises a cylindrical roller 1 configured to apply a roll pressure onto battery cell 2 (omitted for clarity) while rolling over battery cell 2.

A protrusion 11 protruding from a lateral surface of the cylindrical roller 1 in a radial direction of the cylindrical roller 1 is adapted to periodically apply a pressure on the first separator film 22 and the second separator film 24 thereby fusing the first separator film 22 and the second separator film 24 into sealing lines. The battery manufacturing system of further comprises an idle roller 5 arranged opposite to the cylindrical roller 1 so as to support the battery cell 2 against the cylindrical roller 1. The battery cell 2 is guided through a roll gap formed in between idle roller 5.

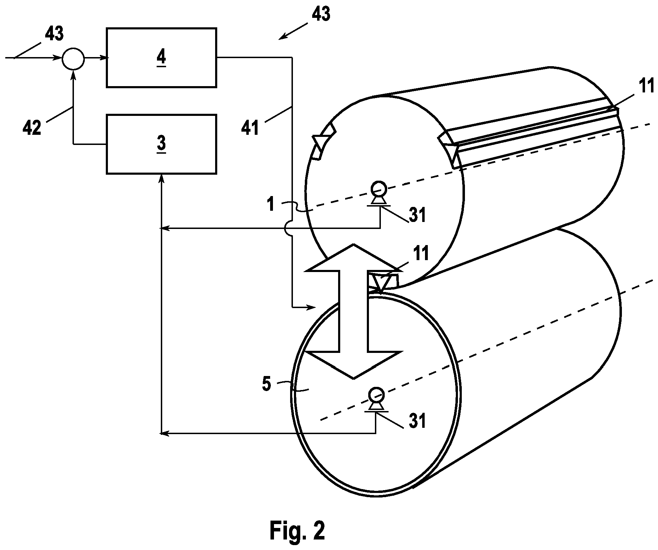

During the manufacturing, the position of the cylindrical roller 1 relative to the idle roller 5, indicated by the vertical double arrow, is fixed. The implications of the fixed relative position are illustrated by the detail view corresponding to the encircled region shown in Figure 2. At the depicted moment, protrusion 11 applies a pressure to the battery cell 2. The battery cell comprises a layer structure with a first electrode material 21 and the second electrode material 23 intermittently dispersed onto a first separator film 22 and a second separator film 24, respectively. This layer structure is guided in a feed direction into a roll gap formed between the cylindrical roller 1 and the idle roller 5. The rotation speed of cylindrical roller 1 and the feed speed of battery cell 2 are synchronized as to allow the protrusion 11 to engage the battery cell 2 in positions, where a gap in the first electrode material 21 and the second electrode material 23 exist.

The cylindrical roller is configured to apply a roll pressure onto a battery cell while rolling over the battery cell. The pressure and resultant friction heat causes the first separator film 22 and the second separator film 24 to be fused into a sealing line across the entire lateral width under the roll gap.

As the applied pressure depends on the width of the roll gap and consequently on the relative position of the cylindrical roller 1 to the idle roller 5, said relative position is preferably be determined manually by trial and error before each start of a new production series. Yet, changes in quality and thickness of the individual layers of the battery cell 2, boundary conditions and wear and tear in the components of the manufacturing system cause the applied pressure to fluctuate or change with time. Hence, the sealing strength of the sealing lines may vary and exceed or be below critical values. While excess pressure might cause the separator films to separate completely and halt the manufacturing process, the implications of subceeding a necessary sealing strength are far more dire.

During subsequent processing stages, the first separator film 22 and the second separator film 24 may part, leading to spillage of electrolyte or short-circuiting with adjacent battery cells 2 in a battery-cell stack. The need for adjusting the relative position between cylindrical roller 1 to the idle roller 5 only becomes apparent, when a fully assembled battery containing a faultily sealed battery cell 2 proves defective.

The above problems may be at least partly solved by the embodiment shown in Fig. 2. Besides the components already present in the previous embodiment, the depicted battery manufacturing system further comprises a pressure measurement device 3 configured to measure a measured pressure 42 applied and/or received by the cylindrical roller 1 while rolling over the battery cell 2. Moreover, the manufacturing system comprises a control unit 4 configured to adjust a position of the cylindrical roller 1 relative to the idle roller 5 as a function of the measured pressure 42.

Pressure measurement device 3 comprises two load cells 31, wherein the cylindrical roller 1 or the idle roller 5 is rotatably mounted on each load cell 31. The load cells 31 are configured to measure a pressure applied or received by the cylindrical roller 1 and the idle roller 5 while rolling over the battery cell. A counterforce corresponding to the measured pressure 42 applied and/or received by the cylindrical roller 1 is transferred to supports and bearings of the cylindrical roller 1 and idle roller 5 and in turn picked up by the load cells 31. While protrusion 11 is not engaged with the first separator film 22 and the second separator film 24, the load cells only pick up the bearing forces needed to rotate and support the weight of the cylindrical roller 1 and idle roller 2, respectively.

The pressure applied to or received by the protrusion manifests itself in a step increase in the pressure signal. The measured pressure 42 can be generated by subtracting bearing forces from the step increase in the pressure signal. This first measured pressure 42 and the second measured pressure 42 is then fed into a control loop 41 schematically drawn in the top left corner of Figure 2. The measured pressure 42 can be an average of the first measured pressure 42 and the second measured pressure 42, a minimum of the measured pressure 42, or a maximum of the first measured pressure 42 and the second measured pressure 42. The measured pressure 42 is then compared to a reference pressure 43 corresponding to a nominal pressure necessary to achieve sufficient sealing strength. The resulting error is communicated to a control unit 4, which is adapted to generate a control signal 44 and send the control signal 44 to actuators (not shown) adapted to adjust a position of the cylindrical roller 1 relative to the idle roller 5 as indicated by the horizontal double arrow.

In this fashion, the applied pressure is measured, monitored, and controlled continuously, assuring that each sealing line possesses sufficient sealing strength. Moreover, if a nominal pressure for achieving sufficient sealing is known, initial positioning experiments at the start of a new production series are circumvented.

The thereby increased control of the applied pressure allows for larger manufacturing speeds, which are further increased by the cylindrical roller 1 comprising three protrusion rows 11, which are equidistantly spaced in an angular direction in intervals of 120° on the lateral surface of the cylindrical roller 1. This allows the sealing of three sealing lines in one revolution of the cylindrical roller 1.

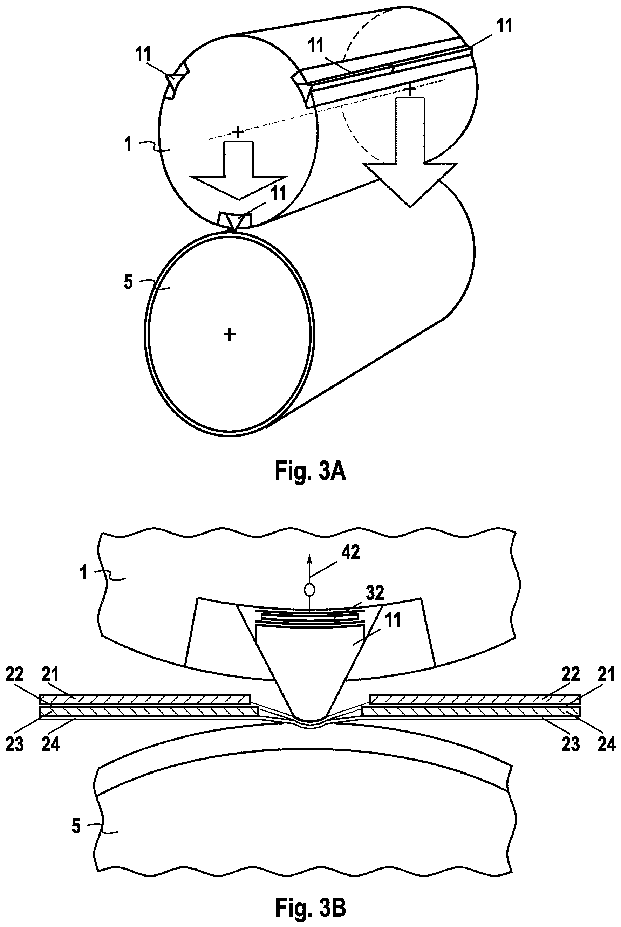

A second inventive embodiment is shown in Figure 3. Similar to the previously shown embodiment, the cylindrical roller 1 comprises three protrusion rows. Here, each protrusion row 11 consists of two protrusions 11, which are aligned in a longitudinal direction of the cylindrical roller 1. As highlighted in the detail view in Figure 3B, the pressure measurement device comprises a plurality of piezoelectric sensors 32 configured to measure a pressure applied and/or received by the protrusion. Each piezoelectric sensor 32 is situated in a radial direction in between the cylindrical roller 1 and one of the protrusions 11. Trice every revolution of cylindrical roller 1, two piezoelectric sensors 32 situated in the same row measure a first measured pressure 42 and a second measured pressure 42 applied and/or received by the respective protrusion 11. Control unit 4 is configured to independently adjust a position of a first longitudinal end and a position of a second longitudinal end of the cylindrical roller 1 relative to the idle roller 5. Moreover, the control unit 4 is configured to adjust a position of the first longitudinal end as a function of the first measured pressure 42 measured by the first piezoelectric sensor 32, which is situated closer to the first longitudinal end, and to adjust a position of the second longitudinal end as a function of the second measured pressure 42 measured by the second piezoelectric sensor 32.

In the depicted exemplary situation, both the first measured pressure 42 and the second measured pressure 42 are too low to guarantee a sealing line with sufficient sealing strength. However, the first measured pressure 42, measured closer to the first longitudinal end is larger than the second measured pressure 42 and therefore, requires a smaller adjustment of the position of the first longitudinal end. As indicated by the length of the arrows at the first longitudinal end and the second longitudinal end, the second longitudinal end of the cylindrical roller 1 is adjusted closer to the idle roller 5 than the first longitudinal end. In this fashion, inhomogeneities in battery cell 2 as well as asymmetric wear and tear in the cylindrical roller 1 and idle roller 5 can be compensated.

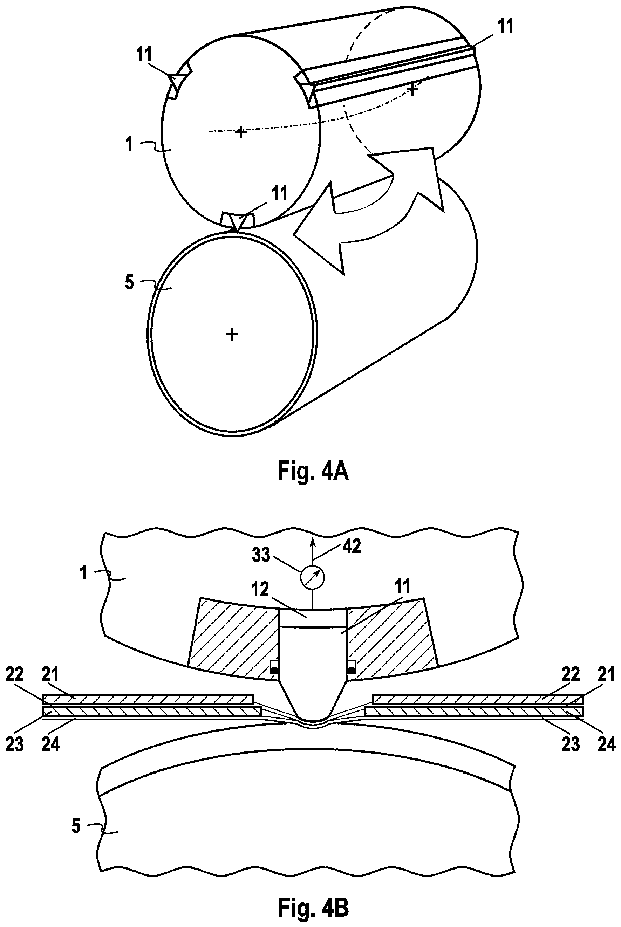

Another inventive embodiment of the manufacturing system is shown in Figures 4A and 4B. Here, three protrusions 11 are each movably mounted within channel 12 on the lateral surface of the cylindrical roller 1 as to seal said channel 12 against the environment of the manufacturing system. Among other sensors (not depicted), the pressure measurement device 3 comprises a pneumatic pressure sensor 33 configured to measure a gas pressure within channel 12 while rolling over the battery cell 2. The pressure applied to or received by the protrusion 11 displaces the protrusion 11, which in turn compresses the gas sealed within the chamber. The consequent change in gas pressure is measured by the pneumatic pressure sensor 33. The channel and protrusion 11 in conjunction act as a pneumatic spring favorably changing the pressure application profile. Moreover, as the gas pressure within channel 12 changes with the entire displacement of the protrusion 11 within the channel, it serves as more of a macroscopic gauge for the applied pressure than a pressure sensor that directly and locally measures the applied pressure.

In the depicted exemplary situation, the measured pressure 42 indicates that the applied pressure is insufficient in the longitudinal center of the cylindrical roller 1 to ensure sealing strength along the entirety of the sealing line. Control unit 4 is further configured to apply a bending pressure to the cylindrical roller 1. To this end, control unit 4 comprises actuators (not shown) applying bending pressure onto secondary bearings (not shown) of the cylindrical roller 1. This bending pressure results in a convex deformation of the cylindrical roller 1 towards the ideal roller 5, illustrated by the horizontal double arrow. In this fashion, the applied pressure can be pinpointedly increased in the longitudinal center of the cylindrical roller 1.

### REFERENCE NUMERALS

- 1: Cylindrical roller
- 2: Battery cell
- 3: Pressure measurement device
- 4: Control unit
- 5: Idle roller
- 11: Protrusion
- 12: Channel
- 21: First electrode material
- 22: First separator film
- 23: Second electrode material
- 24: Second separator film
- 31: Load cell
- 32: Piezoelectric sensor
- 33: Pneumatic pressure sensor
- 41: Control loop
- 42: Measured pressure
- 43: Reference pressure
- 44: Control signal

## Claims

1. A battery manufacturing system comprising
a cylindrical roller (1) configured to apply a roll pressure onto a battery cell (2) while rolling over the battery cell (2);
a protrusion protruding (11) from a lateral surface of the cylindrical roller (1) in a radial direction of the cylindrical roller (1);
a pressure measurement device (3) configured to measure a measured pressure (42) applied and/or received by the cylindrical roller (1) while rolling over the battery cell (2); and
a control unit (4) configured to adjust a position of the cylindrical roller (1) as a function of the measured pressure (42).

2. The battery manufacturing system of claim 1, wherein the pressure measurement device is configured to measure the measured pressure (42) as the protrusion (11) comes into contact with the battery cell (2).

3. The battery manufacturing system of claim 2, further comprising
an idle roller (5) arranged opposite to the cylindrical roller (1) so as to support the battery cell (2) against the cylindrical roller (1),
wherein the control (4) unit is configured to adjust the position of the cylindrical roller (1) relative to the idle roller (5) as a function of the measured pressure (42).

4. The battery manufacturing system of claim 3, wherein the pressure measurement device (3) comprises a load cell (31),
wherein the cylindrical roller (1) or the idle roller (5) is rotatably mounted on the load cell (31) and the load cell (31) is configured to measure a pressure applied or received by the cylindrical roller (1) or the idle roller (3), respectively.

5. The battery manufacturing system of claim 4, wherein a first longitudinal end and a second longitudinal end of cylindrical roller (1) and/or the idle roller (5) are rotatably mounted on load cells (31).

6. The battery manufacturing system of any one of the preceding claims, wherein the pressure measurement device comprises a piezoelectric sensor (32) configured to measure a pressure applied and/or received by the protrusion.

7. The battery manufacturing system of claim 6, wherein the piezoelectric sensor (32) is situated in a radial direction in between the cylindrical roller (1) and the protrusion (11).

8. The battery manufacturing system of any of the preceding claims, wherein the protrusion (11) is movably mounted within a channel (12) on the lateral surface of the cylindrical roller (1) as to atmospherically seal said channel (12), and wherein the pressure measurement device (3) comprises a pneumatic pressure sensor (33) configured to measure a gas pressure within the channel (12) while rolling over the battery cell (2).

9. The battery manufacturing system of any of the preceding claims, wherein the battery manufacturing system further comprises a plurality of protrusions (11) protruding from a lateral surface of the cylindrical roller in a radial direction of the cylindrical roller (1), wherein the protrusions (11) align in a longitudinal direction of the cylindrical roller (1) and wherein pressure measurement device (3) is configured to measure a measured pressure (42) of each of the plurality of protrusions (11) as each protrusion (11) comes into contact with the battery cell (2).

10. The battery manufacturing system of any of the preceding claims, wherein the battery manufacturing system comprises a plurality of protrusion rows, which are spaced in an angular direction on the lateral surface of the cylindrical roller (1).

11. The battery manufacturing system of any of the preceding claims, wherein the control unit (4) is configured to independently adjust a position of a first lateral end of the cylindrical roller (1) and a position of a second lateral end of the cylindrical roller (1) and/or a position of a first lateral end of the idle roller (5) and a position of a second lateral end of idle roller (5).

12. The battery manufacturing system of any of the preceding claims, wherein the control unit (4) is configured to apply a bending pressure to the cylindrical roller (1) and/or idle roller (5).

13. The battery manufacturing system of any of the preceding claims, wherein the protrusion (11) is a tip.

14. A battery manufacturing method comprising
applying a roll pressure onto a battery cell (2) using a cylindrical roller with a protrusion (11) protruding from a lateral surface of the cylindrical roller (1) in a radial direction of the cylindrical roller (1);
rolling over the battery cell (2);
while the cylindrical roller rolling (1) over the battery cell (2), measuring a measured pressure applied and/or received by the cylindrical roller (2); and
adjusting a position of the cylindrical roller (1) as a function of the measured pressure (42).

15. A battery manufacturing method of claim 14, the method further comprising feeding the measured pressure (42) into a control loop (41);
generating a control signal (44) by comparing the measured pressure (42) to a reference pressure (43) to be applied and/or received by the cylindrical roller (1); and
adjusting a position of the cylindrical roller (3) under load and/or in real-time based on the control signal (44);

16. A battery manufactured with a manufacturing system of one of the claims 1 to 13 or manufactured according to a method of one of the claims 14 to 15.

## Amended claims

### Amended claims in accordance with Rule 137(2) EPC.

1. A battery manufacturing system comprising
a cylindrical roller (1) configured to apply a roll pressure onto a battery cell (2) for sealing a first separator film (22) of the battery cell (2) and a second separator film (24) of the battery cell (2) into a sealing line while rolling over the battery cell (2); and
a protrusion protruding (11) from a lateral surface of the cylindrical roller (1) in a radial direction of the cylindrical roller (1); **characterized in** the battery manufacturing system further comprising
a pressure measurement device (3) configured to measure a pressure (42) applied and/or received by the cylindrical roller (1) while rolling over the battery cell (2); and
a control unit (4) configured to adjust a position of the cylindrical roller (1) as a function of the measured pressure (42).

2. The battery manufacturing system of claim 1, wherein the pressure measurement device is configured to measure the measured pressure (42) as the protrusion (11) comes into contact with the battery cell (2).

3. The battery manufacturing system of claim 2, further comprising
an idle roller (5) arranged opposite to the cylindrical roller (1) so as to support the battery cell (2) against the cylindrical roller (1),
wherein the control (4) unit is configured to adjust the position of the cylindrical roller (1) relative to the idle roller (5) as a function of the measured pressure (42).

4. The battery manufacturing system of claim 3, wherein the pressure measurement device (3) comprises a load cell (31),
wherein the cylindrical roller (1) or the idle roller (5) is rotatably mounted on the load cell (31) and the load cell (31) is configured to measure a pressure applied or received by the cylindrical roller (1) or the idle roller (3), respectively.

5. The battery manufacturing system of claim 4, wherein a first longitudinal end and a second longitudinal end of cylindrical roller (1) and/or the idle roller (5) are rotatably mounted on load cells (31).

6. The battery manufacturing system of any one of the preceding claims, wherein the pressure measurement device comprises a piezoelectric sensor (32) configured to measure a pressure applied and/or received by the protrusion.

7. The battery manufacturing system of claim 6, wherein the piezoelectric sensor (32) is situated in a radial direction in between the cylindrical roller (1) and the protrusion (11).

8. The battery manufacturing system of any of the preceding claims, wherein the protrusion (11) is movably mounted within a channel (12) on the lateral surface of the cylindrical roller (1) as to atmospherically seal said channel (12), and wherein the pressure measurement device (3) comprises a pneumatic pressure sensor (33) configured to measure a gas pressure within the channel (12) while rolling over the battery cell (2).

9. The battery manufacturing system of any of the preceding claims, wherein the battery manufacturing system further comprises a plurality of protrusions (11) protruding from a lateral surface of the cylindrical roller in a radial direction of the cylindrical roller (1), wherein the protrusions (11) align in a longitudinal direction of the cylindrical roller (1) and wherein pressure measurement device (3) is configured to measure a measured pressure (42) of each of the plurality of protrusions (11) as each protrusion (11) comes into contact with the battery cell (2).

10. The battery manufacturing system of any of the preceding claims, wherein the battery manufacturing system comprises a plurality of protrusion rows, which are spaced in an angular direction on the lateral surface of the cylindrical roller (1).

11. The battery manufacturing system of any of the preceding claims, wherein the control unit (4) is configured to independently adjust a position of a first lateral end of the cylindrical roller (1) and a position of a second lateral end of the cylindrical roller (1) and/or a position of a first lateral end of the idle roller (5) and a position of a second lateral end of idle roller (5).

12. The battery manufacturing system of any of the preceding claims, wherein the control unit (4) is configured to apply a bending pressure to the cylindrical roller (1) and/or idle roller (5).

13. The battery manufacturing system of any of the preceding claims, wherein the protrusion (11) is a tip.

14. A battery manufacturing method comprising
applying a roll pressure onto a battery cell (2) for sealing a first separator film (22) of the battery cell (2) and a second separator film (24) of the battery cell (2) into a sealing line using a cylindrical roller with a protrusion (11) protruding from a lateral surface of the cylindrical roller (1) in a radial direction of the cylindrical roller (1) ;
rolling over the battery cell (2);
while the cylindrical roller rolling (1) over the battery cell (2), measuring a pressure applied and/or received by the cylindrical roller (2); and
adjusting a position of the cylindrical roller (1) as a function of the measured pressure (42).

15. A battery manufacturing method of claim 14, the method further comprising feeding the measured pressure (42) into a control loop (41);
generating a control signal (44) by comparing the measured pressure (42) to a reference pressure (43) to be applied and/or received by the cylindrical roller (1); and
adjusting a position of the cylindrical roller (3) under load and/or in real-time based on the control signal (44).
